# FASCICULE DE BREVET EUROPEEN

(11) **EP 0 833 075 B1**
(45) Date de publication et mention de la délivrance du brevet: **19.12.2001**
(21) Numéro de dépôt: 97116707.7
(22) Date de dépôt: 25.09.1997
(51) Int. Cl.: F16F 15/127, F16D 3/68

(54) **Amortisseur de torsion à pièce de transmission à doigts, notamment friction d'embrayage pour véhicule automobile**
Torsionsdämpfer mit Fingern für Getriebeelement, insbesondere Reibungskupplung eines Fahrzeugs
Torsional damper with finger-like projections for transmission element, in particular vehicle friction clutch

(30) Priorité: 26.09.1996 FR 9611839
(43) Date de publication de la demande: 01.04.1998
(73) Titulaire: VALEO, 75017 Paris (FR)
(72) Inventeur: Graton, Michel, 75020 Paris (FR); Tauvron, Fabrice, 91200 Athis-Mons (FR)
(74) Mandataire: Gamonal, Didier

(56) Documents cités:
- EP-A- 0 133 944
- EP-A- 0 592 297
- EP-A- 0 655 563
- US-A- 1 671 436
- US-A- 4 627 885

## Description

La présente invention concerne les amortisseurs de torsion, notamment les frictions d'embrayage pour véhicules automobiles, comportant deux parties coaxiales montées mobiles l'une par rapport à l'autre à l'encontre de moyens élastiques d'amortissement à masse élastique.

Un tel amortisseur est décrit dans le document FR-A-1 340 558 et chaque partie coaxiale comporte une pièce de transmission de couple. Des moyens élastiques d'amortissement interviennent entre les pièces de transmission de couple.

Cette solution est encombrante radialement car l'une des pièces de transmission de couple comporte, à sa périphérie externe, une couronne disposée coaxialement à un moyeu présentant des doigts saillant radialement vers l'extérieur.

La couronne comporte des doigts saillant radialement vers l'intérieur.

Les doigts de la couronne alternent circonférentiellement avec les doigts du moyeu, les moyens élastiques d'amortissement interviennent circonférentiellement entre les doigts.

En se reportant à la figure 2 de ce document, on voit qu'une distance non négligeable sépare les extrémités libres des doigts du moyeu de la périphérie externe de la couronne.

En outre, les pièces de transmission de couple sont relativement coûteuses.

La présente invention a pour objet de pallier à ces inconvénients de manière simple et économique.

C'est donc un but de l'invention de supprimer la couronne de l'une des pièces de transmission de couple.

C'est encore un but de l'invention de rendre plus économique et simple les pièces de transmission de couple.

Suivant l'invention, un amortisseur de torsion du type sus-indiqué est caractérisé en ce que les pièces de transmission de couple sont à l'image l'une de l'autre et comportent chacune un anneau central portant, en saillie radiale vers l'extérieur, lesdits doigts, en ce que lesdites pièces de transmission entourent par leur anneau central un moyeu, en ce que l'anneau central de l'une des pièces de transmission de couple est fixé au moyeu propre à être calé en rotation sur un premier arbre, tel qu'un arbre mené, tandis que l'anneau central de l'autre pièce de transmission de couple est fixé centralement à une pièce globalement d'orientation transversale propre à être calé en rotation sur un deuxième arbre, tel qu'un arbre menant.

Grâce à l'invention, les pièces de transmission de couple sont dépourvues de couronne et on peut réduire l'encombrement radial de l'amortisseur de torsion.

S'agissant par exemple d'un amortisseur de torsion sous forme d'une friction d'embrayage pour embrayage à friction, le plateau de pression de l'embrayage peut venir au plus près de la périphérie externe des doigts des pièces de transmission de couple.

D'une manière générale, on simplifie les pièces de transmission de couple puisque celles-ci sont à l'image l'une de l'autre (semblables) et comportent des doigts saillants radialement vers l'extérieur, en sorte qu'aucune desdites pièces ne présente, à sa périphérie externe, une couronne radialement encombrante.

Pour un même encombrement radial il est donc possible d'augmenter la taille radiale des doigts et des moyens élastiques d'amortissement, en sorte que l'on peut transmettre plus de couple et/ou augmenter le débattement angulaire entre les deux parties de l'amortisseur.

On notera que le moyeu et la pièce transversale sont des pièces économiques et que les pièces de transmission de couple peuvent être lisses à leur périphérie interne. Grâce à la présence de la pièce d'orientation transversale on réduit également l'encombrement axial de l'amortisseur de torsion.

La fixation des pièces de transmission de couple respectivement sur le moyeu et la pièce transversale peut être réalisée par soudage.

En variante, la fixation de la pièce de transmission de couple sur son moyeu associé peut être réalisée par emmanchement à force et sertissage. Il en est de même de la fixation de l'autre pièce de transmission de couple sur la pièce d'orientation transversale.

Avantageusement cette fixation est réalisée à l'aide d'organes de fixation tels que des rivets, des vis ou des boulons.

Dans ce cas, avantageusement, le moyeu présente une collerette d'orientation transversale pour la fixation de sa pièce de transmission de couple. Ceci permet de simplifier les pièces de transmission de couple dont les anneaux centraux présentent un nombre double de trous pour les organes de fixation.

On peut donc fixer simultanément lesdites pièces au moyeu et à la pièce transversale. Ces pièces de transmission de couple peuvent être identiques.

Suivant une caractéristique importante, les doigts sont décalés axialement par rapport à l'anneau central de la pièce de transmission de couple.

Grâce à cette disposition, les doigts peuvent être dans le même plan et les pièces de transmission de couple peuvent être identiques tout en réduisant l'encombrement axial. On standardise ainsi l'amortisseur de torsion.

Ces pièces sont imbriquées l'une dans l'autre et, pour réaliser un centrage, la périphérie interne d'un doigt d'une des pièces de transmission de couple coopère avec la périphérie externe de l'anneau de l'autre pièce de transmission de couple.

Grâce au décalage axial des doigts, par coopération de formes, il est formé ainsi à la périphérie interne de chaque doigt une portée de contact propre à venir, de préférence de manière complémentaire, en contact intime avec la périphérie externe, formant portée de centrage de l'autre masse.

Les doigts peuvent être portés par une surépaisseur de l'anneau central de ladite pièce.

Grâce à cette disposition les pièces de transmission de couple sont calées axialement l'une par rapport à l'autre et on peut limiter le débattement angulaire entre les deux pièces de transmission de couple par venue en butée circonférentielle des surépaisseurs les unes avec les autres.

Tout ceci est obtenu par coopération de formes.

Grâce à l'invention on peut former, par l'intermédiaire des moyens élastiques d'amortissement, un sous-ensemble comportant les deux pièces, que l'on peut tester par avance pour voir si l'on obtient la bonne courbe caractéristique.

Avantageusement les moyens élastiques d'amortissement comportent une lame déformable en matériau composite noyée, au moins en partie, dans la masse élastique.

Grâce à cette disposition on obtient une bonne liaison entre les deux pièces de transmission de couple.

En particulier, on évite un décalage axial entre les deux pièces de transmission tout en contrôlant l'élasticité et l'amortissement.

De manière précitée on obtient, par coopération de formes, un centrage et des moyens de butée circonférentielle entre les deux pièces.

La description qui va suivre illustre l'invention en regard des dessins annexés dans lesquels :
- la figure 1 est une vue en coupe axiale, selon la ligne 1-1 de la figure 2, d'une friction d'embrayage formant un amortisseur de torsion selon l'invention ;
- la figure 2 est une vue selon la flèche 2 de la figure 1 sans le disque de friction ;
- la figure 3 est une vue en perspective des pièces identiques de transmission de couple selon l'invention.

Dans ces figures on a représenté un amortisseur de torsion sous la forme d'une friction d'embrayage pour véhicule automobile.

Cette friction comporte un disque de friction 2 portant à fixation, sur chacune de ses faces, une garniture de friction 1, une première pièce de transmission de couple 3, un moyen central 4, une seconde pièce de transmission de couple 5 et des moyens élastiques d'amortissement 9,10 à action circonférentielle.

Le disque de friction 2 constitue l'élément d'entrée de la friction d'embrayage.

De manière connue, les garnitures de friction 1 ici collées, en variante rivetées, sur le disque 2, sont destinées à être serrées entre les plateaux de pression et de réaction de l'embrayage. Les garnitures 1 s'étendent à la périphérie externe du disque 2.

Le disque de friction 2 est donc destiné à être solidarisé en rotation de manière débrayable à un arbre menant, à savoir ici le vilebrequin du moteur à combustion interne.

Le moyeu 4 est doté intérieurement de cannelures 60 pour sa liaison en rotation à un arbre mené, à savoir ici l'arbre d'entrée de la boîte de vitesses.

Le disque de friction 2, ainsi que les pièces 3 et 5, entourent le moyeu 4 constituant l'élément de sortie de la friction d'embrayage d'axe de symétrie axiale X-X.

Les pièces 2,3, et 5 sont donc ouvertes (ou trouées centralement).

Les moyens élastiques d'amortissement 9,10 accouplent entre elles les pièces 3 et 5 de transmission de couple. La friction d'embrayage comporte donc un nombre réduit de pièces au bénéfice d'une réduction des coûts.

Les moyens élastiques 9,10 sont constitués ici, comme décrit dans le document FR-A-2 661 720, par au moins une lame 9 en matériau composite enrobé (noyé), ici en majeure partie, dans une masse élastique 10. La lame 9 est adhérisée à la masse 10.

Cette lame 9 est en matière plastique, tel que du polyamide 6.6, dans laquelle sont noyées des fibres, ici continues, telles que des fibres de verre, de carbone ou d'aramide, qui sont orientées de préférence dans le sens des efforts agissant sur la lame 9 lors de la rotation relative entre les pièces 3 et 5.

En variante les fibres sont, par exemple, imprégnées d'une résine thermodurcissable du type epoxy ou vinyl-ester.

La masse élastique 10 est constituée par de l'élastomère tel que du caoutchouc naturel ou du caoutchouc de synthèse à base de butyl ou de styrol-butadiène.

La lame 9 est ici ondulée et un film de masse élastique 10 existe au niveau des sommets de la lame. Latéralement (circonférentiellement) une plus grande quantité de masse élastique 10 est présente.

On notera ici la présence de bagues 13 au voisinage des sommets internes des ondulations de la lame 9 les plus proches du moyeu 4.

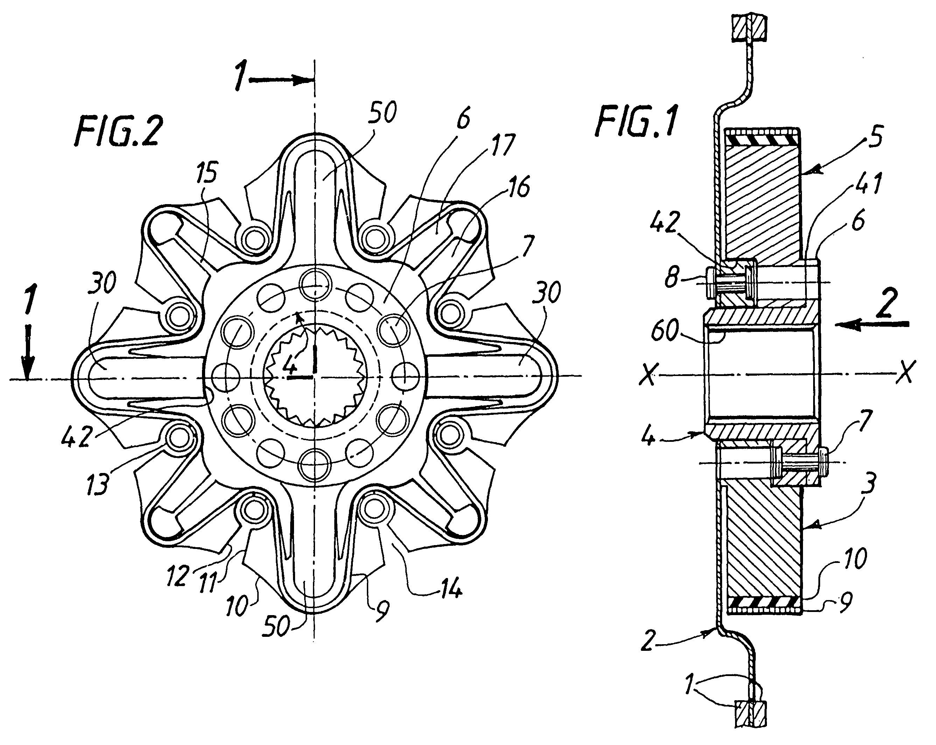

La masse élastique 10 est fendue (figure 2), en sorte qu'il est formé des butées 11 et 12 radialement au-dessus des bagues 13 montées dans des orifices élargis formant le fond des fentes 14 séparant entre elles les butées 11 et 12, qui s'étendent donc circonférentiellement.

Les sommets externes des ondulations, non associées aux doigts 30,50, radialement les plus éloignés du moyeu 4, sont également associés à des orifices formant le fond de fentes 15 séparant entre elles deux butées circonférentielles 16,17.

Les fentes 15 borgnes s'étendent radialement vers l'axe de symétrie axiale X-X de la friction, tandis que les fentes 14 borgnes s'étendent radialement en direction opposée à l'axe X-X.

Grâce aux orifices précités, une faible épaisseur de matière élastique 10 est présente au niveau des sommets de la lame 9.

Les fentes 14 sont plus larges circonférentiellement que les fentes 15, en sorte que les butées 16,17 sont admises à venir en contact les unes avec les autres avant venue en contact des butées 11,12.

La première pièce de transmission de couple 3 est solidaire centralement, ici par des rivets 8, en variante par des vis ou des boulons, du disque de friction 2, tandis que la seconde pièce de transmission de couple 5 est solidaire centralement, ici par des rivets 7, en variante par des vis ou des boulons, du moyeu central 4.

Suivant une caractéristique, la fixation du disque 2 et du moyeu 4 aux pièces 3,5 est donc réalisée centralement.

La friction d'embrayage comporte donc deux parties coaxiales, tournantes autour de l'axe de symétrie axial X-X, montées mobiles l'une par rapport à l'autre à l'encontre de moyens élastiques d'amortissement 9,10, ici à action circonférencielle ; chaque partie coaxiale comprenant une pièce de transmission de couple à doigts d'orientation radiale.

L'une des parties, dites première partie, comprend la première pièce 3 solidaire du disque de friction 2 avec ses garnitures de friction 1 et l'autre des parties, dite deuxième partie, comprend la seconde pièce 5 solidaire du moyeu 4.

La première partie est destinée à être solidarisée en rotation à un arbre menant, tandis que la deuxième partie est destinée à être solidarisée en rotation à un arbre mené.

Les moyens élastiques 3 comportent ici une lame 9 continue et ondulée.

Bien entendu, en variante la lame 9 peut ne pas être continue et être fractionnée en plusieurs portions.

Elle peut également ne pas être enrobée en majeure partie dans la masse élastique. Les sommets de la ou des lames peuvent, par exemple, faire saillie radialement vers l'extérieur et vers l'intérieur par rapport à la masse élastique 10 de forme annulaire. Cette masse peut être alors dotée de trous pour être plus aisément déformable.

Le moyeu 4 a une forme tubulaire et présente, à son extrémité arrière, une collerette 6 d'orientation transversale.

Ici la collerette 6 est d'un seul tenant avec le moyeu 6 pour des raisons économiques et réduction du nombre des pièces.

En variante, la collerette 6 peut être rapportée sur le moyeu 4. L'extrémité libre du moyeu 4 traverse l'ouverture centrale du disque 2 supportant les garnitures 1.

Pour simplification et standardisation de l'amortisseur de torsion, selon l'invention, les pièces de transmission de couples 3,5 sont à l'image l'une de l'autre (semblables). Chaque pièce 3,5 est en forme d'anneau 40 portant, en saillie radiale vers l'extérieur, des doigts respectivement 30,50. Le nombre de doigts dépend des applications. Par exemple, trois doigts répartis régulièrement circonférentiellement peuvent être prévus par pièces 3,5.

Ici chaque pièce 3,5 comporte deux doigts, respectivement 30,50, diamétralement opposés. Les doigts 30,50 sont ici d'un seul tenant avec l'anneau des pièces 3,5 pour des raisons économiques, de facilité de fabrication et de réduction du nombre de pièces.

Les doigts 30 alternent circonférentiellement avec les doigts 50.

Les pièces de transmission de couple 3,5 sont d'épaisseur variable, selon une caractéristique, pour pouvoir être imbriquées axialement l'une dans l'autre afin de réduire l'encombrement axial.

Cela permet également de créer des portées de contact et des butées permettant de limiter le débattement angulaire relatif entre les pièces 3 et 5.

Plus précisément, les doigts 30,50 sont décalés axialement par rapport à l'anneau central 40 de la pièce de transmission de couple 3,5, et ce de manière non symétrique.

Le décalage axial des doigts d'une pièce 3,5 dans un sens est plus important en direction de l'anneau 40 de l'autre pièce que dans l'autre sens.

Ainsi grâce au décalage axial non symétrique il est formé, à la périphérie interne, par exemple des doigts 30, une portée de forme annulaire 42. Cette portée 42 est une portée de contact car elle est admise à venir en contact, ici de manière complémentaire ou intime, avec la périphérie externe de l'anneau central 40 de la seconde pièce 5.

La périphérie externe de l'anneau 40 de l'une des pièces 3,5 constitue donc une portée de centrage pour les doigts 50,30 de l'autre pièce 5,3.

Les portées de contact 42 des doigts 30,50 ont ici une forme complémentaire à celle de la périphérie externe de l'anneau 40.

L'anneau 40 est doté d'une surépaisseur 43 au niveau des doigts 30, respectivement 50. Cette surépaisseur 43 est délimitée par une face annulaire d'orientation transversale 20. Cette face 20 forme un épaulement pour l'appui de la face d'extrémité transversale 21 d'extrémité concernée de l'autre pièce 5,3 de transmission de couple.

Si besoin est, on peut revêtir les épaulements 21 et les portées de contact 42 d'une couche en matériau à faible coefficient de frottement.

De même, on peut revêtir la périphérie interne de l'anneau 40 d'une telle couche. Ainsi on favorise de mouvement de rotation relatif entre les deux pièces 3,5.

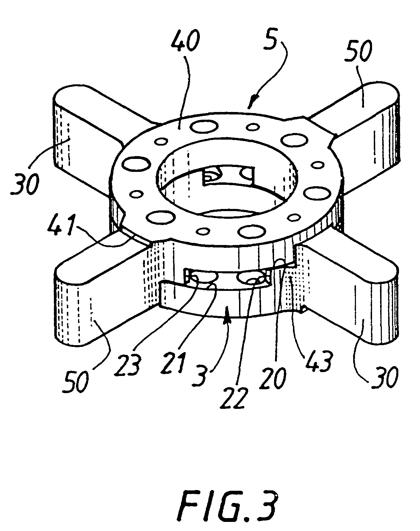

Grâce à ces surépaisseurs 43 on forme des butées 22,23 (figure 3) constituées à la faveur des bords latéraux ou circonférentiels de raccordement de la base de la surépaisseur à la partie principale de l'anneau 40.

Ainsi les pièces 3 et 5 peuvent être identiques, ce qui favorise la standardisation de l'amortisseur de torsion et favorise la réduction des coûts, d'autant plus que la pièce 3,5 a une forme simple.

Ces pièces 3, 5 ont donc une épaisseur variable, l'anneau 40 présentant localement des surépaisseurs 43 à partir desquelles sont issus les doigts 30,50 décalés axialement par rapport aux surépaisseurs 43 avec formation de portées de contact 42.

Bien entendu, en variante la première pièce 3 peut être centrée par la périphérie externe du moyeu 4.

Au niveau de l'autre face latérale, opposée à la face latérale 21 venant en contact avec la surépaisseur 43 de l'autre pièce, il apparaît une portée 41 à la périphérie externe de l'anneau 40 fonction du décalage axial des doigts 30,50 par rapport à l'anneau 40.

Bien entendu pour les opérations de rivetage, l'anneau 40 est doté de trous non référencés, tout comme la collerette 6 du moyeu 4 et, centralement, le disque 2.

Le disque 2 est fixé latéralement à la première pièce 3, un faible intervalle existant entre le disque 2 et les doigts 30.

Pour la position de repos de l'amortisseur, les trous sont axialement alignés (figure 1), en sorte que l'on peut procéder à la fixation simultanée par rivetage du disque 2 à la pièce 3 et du moyeu 4 à la pièce 5. Chaque pièce 3,5 présente donc deux fois plus de trous que de rivets 7 respectivement 8.

On notera également que le décalage axial est tel que ces doigts sont sur le même plan médian. Ils ne sont donc pas décalés axialement.

Dans la position de repos de l'amortisseur, les doigts 30 sont intercalés entre les doigts 50. On a donc une répartition régulière (à 90°) des doigts 30,50.

Lors de la fabrication, il suffit donc de retourner une pièce 3,5 par rapport à l'autre pour réaliser une imbrication. Ensuite, on fixe les moyens amortisseurs 9,10, puis le disque 2 et le moyeu 4.

Ces moyens 9,10 sont conformés pour coiffer les doigts 30,50 à extrémité libre arrondie non blessante (figure 2).

Plus précisément, les moyens amortisseurs 9,10 coiffent l'extrémité libre des doigts 30,50. Les sommets externes de la lame 9 ont une forme arrondie adaptés à celle de l'extrémité libre des doigts 30,50.

Ici on fixe les moyens amortisseurs 9,10 sur le bout des doigts 30,50. Cette fixation est réalisée par adhérisation de la masse élastique 10 sur le bout des doigts 30,50. Il peut s'agir, par exemple, d'un collage ou d'une vulcanisation in situ.

Compte tenu de l'épaisseur des doigts 30,50, on a un bon positionnement axial des pièces 3 et 5 l'une par rapport à l'autre, en sorte que la collerette 6 du moyeu suffit pour immobiliser axialement, en combinaison avec les moyens amortisseurs 9,10, les deux pièces 3,5.

Plus précisément, les doigts 30,50 sont plus larges axialement que circonférentiellement. La lame 9 est déformable. Elle est peu épaisse et a une largeur globalement égale à la largeur axiale des doigts 30,50 et évite un déplacement axial relatif de ceux-ci.

On notera que le disque 2, d'orientation transversale, a une forme tortueuse à sa périphérie externe afin que les garnitures de friction 1 soient décalées axialement.

Bien entendu, cela dépend des applications, le disque pouvant être de forme plane.

Bien entendu, la lame 9 peut être fractionnée de manière précitée, par exemple en quatre portions en forme de W. Les sommets externes de la lame 9, adjacents aux doigts 30,50, sont dans ce cas ouverts.

En variante, chaque portion peut s'étendre sur 180°.

Quoi qu'il en soit, la transmission du couple s'opère essentiellement par une flexion de la lame et par compression de la masse élastique 10.

Bien entendu, on peut augmenter le nombre de doigts et donner une autre forme aux moyens amortisseurs.

Par exemple ceux-ci peuvent être en quatre parties avec un bloc en matière élastique, telle que de l'élastomère, collé sur un doigt 30, un bloc collé sur un doigt 50 et une lame métallique en forme de U ou de V entre les deux blocs.

En variante la lame peut être métallique.

On appréciera néanmoins que la constitution des moyens amortisseurs 9,10 à lame composite 9 et masse élastique donne de bons résultats car elle permet d'obtenir - lors du mouvement relatif entre les deux parties 2,3 et 4,5 de l'amortisseur - une grande progressivité dans le couple transmis, un amortissement important et reproductible, un réglage indépendant de l'élasticité et de l'amortissement, une excellente tenue en fatigue du matériau composite, un fluage limité et un encombrement réduit.

Comme mentionné ci-dessus, lors du mouvement relatif entre les deux parties 2,3 et 4,5, les butées 16,17 viennent d'abord en contact, puis enfin on obtient un contact entre les butées 12,11. On peut donc obtenir une intervention étagée de la masse élastique 10.

L'élasticité de la lame 9 est bien réglée, et ce en combinaison avec les fentes 14,15. La masse élastique est admise à s'enrouler autour des bagues 13, ce qui permet de bien maîtriser le fluage de ladite masse.

Les doigts 30,50 permettent également de bien maîtriser le fluage. La lame 9 constitue une ceinture au niveau des doigts 30,50.

Grâce aux moyens élastiques 9,10 on peut former un sous-ensemble avec les pièces 3,5 identiques et fixer ce sous-ensemble en final sur le disque 2 et la collerette 6. Le temps de montage final est donc réduit. En outre, l'amortisseur est bien équilibré.

Bien entendu, le disque 2 peut être fixé directement sur un volant moteur, en sorte que la présence des garnitures n'est pas obligatoire. Le moyeu 4 n'est pas forcément cannelé intérieurement ; il peut être fixé directement en bout de l'arbre mené.

D'une manière générale, l'amortisseur de torsion peut, en variante, appartenir à un embrayage de verrouillage dit "lock-up" monté dans un appareil d'accouplement hydrocinétique.

Il peut appartenir à un double-volant amortisseur pour véhicule automobile.

Le disque 2 peut donc être plus épais et consister en un plateau. Ainsi la première pièce de transmission de couple 3 est fixée à une pièce globalement d'orientation transversale appartenant à l'élément d'entrée de l'amortisseur de torsion.

On notera que les pièces de transmission 3,5 présentent des lamages par logement des têtes des organes de fixation 7,8, ici des rivets, du moyeu 4 et du disque 2 aux pièces 5,3.

On peut profiter de la configuration de la collerette 6 pour fixer un flasque supplémentaire permettant de retenir les moyens élastiques 9,10 du côté opposé à la pièce globalement d'orientation transversale 2 (le disque 2).

De préférence les bords des fentes 14,15 présentent une dépouille (sont inclinés), en sorte que lorsque lesdits bords viennent en butée (fente 14 ou 15 de largeur nulle), il se produit une déformation contrôlée dans la masse élastique 10 dans un seul sens. Dans ce cas, on peut se passer du flasque supplémentaire.

Bien entendu, la présence des bagues 13 n'est pas indispensable et on peut inverser les structures, le disque 2 pouvant être adapté à être calé en rotation sur un arbre mené, tandis que le moyeu peut être adapté à être calé en rotation sur un arbre menant. Le disque 2 est adapté à être calé en rotation sur un second arbre, tel qu'un arbre menant, tandis que le moyeu 4 est destiné à être calé en rotation sur un premier arbre, tel qu'un arbre mené. Le disque 2 est disposé au voisinage de l'une des extrémités du moyeu 4.

Ainsi qu'il ressort à l'évidence de la description et des dessins, les doigts 30,50 sont plus larges axialement que les anneaux 40 et le décalage axial des doigts 30,50 par rapport aux anneaux 40 permet d'éviter toute interférence avec le disque 2. L'amortisseur de torsion est compact axialement du fait que les anneaux 40, d'épaisseur moindre que les doigts 30,50, sont engagés en partie sous les doigts 30,50. Le disque 2 permet de simplifier la pièce 3.

Bien entendu on peut rapporter les doigts 30,50 sur l'anneau 40. Les doigts 30,50 peuvent être fixés par rivetage, vissage, boulonnage, soudage ou autres sur l'anneau 40.

Chaque doigt 30,50 présentent alors latéralement des ailes de part et d'autre de la partie principale du doigt 30,50 pour sa fixation par exemple par rivetage sur l'anneau 40.

## Revendications

1. Amortisseur de torsion, notamment friction d'embrayage pour véhicule automobile, comportant deux parties coaxiales (2,3-4,5), comprenant chacune une pièce de transmission de couple (3,5), et des moyens élastiques d'amortissement (9,10), comprenant une masse élastique (10), dans laquelle les parties coaxiales (2,3-4,5) sont montées mobiles l'une par rapport à l'autre à l'encontre des moyens élastiques d'amortissement (9,10) fixés sur les doigts (30,50) d'orientation radiale que présentent circonférentiellement, en alternance, les pièces de transmission de couple (3,5), **caractérisé en ce que** les pièces de transmission de couple (3,5) sont à l'image l'une de l'autre et comportent chacune un anneau central (40) portant en saillie radiale vers l'extérieur lesdits doigts, **en ce que** les pièces de transmission de couple (3,5) entourent par leur anneau central (40) un moyeu (4), **en ce que** l'anneau central de l'une (5) des pièces de transmission de couple (3,5) est fixé au moyeu (4), adapté à être calé en rotation sur un premier arbre tel qu'un arbre mené, tandis que l'anneau central (40) de l'autre (3) des pièces de transmission de couple (3,5) est fixé centralement à une pièce (2), globalement d'orientation radiale, adaptée à être solidarisée en rotation à un second arbre tel qu'un arbre menant.

2. Amortisseur selon la revendication 1, **caractérisé en ce que** les pièces de transmission de couple (3,5) sont identiques entre elles.

3. Amortisseur selon la revendication 1 ou 2, **caractérisé en ce que** les doigts (30,50) sont décalés axialement par rapport à l'anneau central (40) de la pièce de transmission de couple (3,5).

4. Amortisseur selon la revendication 3, **caractérisé en ce que** la périphérie interne des doigts (30,50) de l'une des pièces de transmission de couple (3,5) constitue une portée de contact (42) propre à venir en contact avec la périphérie externe de l'anneau (40) de l'autre pièce de transmission de couple (3,5).

5. Amortisseur selon la revendication 3 ou 4, **caractérisé en ce que** les doigts (30,50) sont portés par une surépaisseur (43) de l'anneau de la pièce de transmission de couple (3,5).

6. Amortisseur selon la revendication 5, **caractérisé en ce que** les surépaisseurs (43) des pièces de transmission de couple (3,5) sont admises à venir circonférentiellement en butée les unes avec les autres pour limiter le débattement angulaire relatif entre les pièces de transmission de couple (3,5).

7. Amortisseur selon l'une quelconque des revendications 1 à 6, **caractérisé en ce que** le moyeu (4) présente une collerette (6) d'orientation transversale pour fixation centrale à l'aide d'organes de fixation (7), tels que des rivets (7), de l'anneau (40) de sa pièce de transmission de couple (5) associée.

8. Amortisseur selon la revendication 7, **caractérisé en ce que** la pièce, globalement d'orientation transversale (2), est fixée par des organes de fixation, tels que des rivets (8), à l'anneau de sa pièce de transmission de couple (3) associée.

9. Amortisseur selon l'une quelconque des revendications 1 à 8, **caractérisé en ce que** les moyens élastiques d'amortissement (9,10) coiffent les extrémités libres des doigts (30,50) en étant fixés à celles-ci par leur masse élastique (10).

10. Amortisseur selon la revendication 9, **caractérisé en ce que** lesdits moyens élastiques (9,10) comportent une lame (9) ondulée, éventuellement fractionnée, en matériau composite, noyée au moins en partie dans la masse élastique (10).

11. Amortisseur selon l'une quelconque des revendications 1 à 10, **caractérisé en ce que** la pièce globalement d'orientation transversale (2) consiste en un disque (2) portant à fixation, à sa périphérie externe, des garnitures de friction propres à être serrées entre les plateaux de pression et de réaction d'un embrayage.

12. Amortisseur de torsion selon l'une quelconque des revendications 1 à 11, **caractérisé en ce que** axialement les doigts (30,50) sont plus larges que leur anneau associé (40).

## Patentansprüche

1. Torsionsdämpfer, insbesondere Reibungskupplungsscheibe für ein Kraftfahrzeug, umfassend zwei koaxiale Teile (2, 3 - 4, 5), die jeweils ein Element zur Drehmomentübertragung (3, 5) enthalten, und elastische Dämpfungsmittel (9, 10), die eine elastische Masse (10) enthalten, in der die koaxialen Teile (2, 3 - 4, 5) im Verhältnis zueinander beweglich entgegen den elastischen Dämpfungsmitteln (9, 10) gelagert sind, die an radial ausgerichteten Fingern (30, 50) befestigt sind, die die Elemente zur Drehmomentübertragung (3, 5) in Umfangsrichtung abwechselnd aufweisen,
**dadurch gekennzeichnet,**
**daß** die Elemente zur Drehmomentübertragung (3, 5) in einander widerspiegelnder Entsprechung ausgeführt sind und jeweils einen mittigen Ring (40) umfassen, der, radial nach außen vorstehend, die besagten Finger trägt,
**daß** die besagten Elemente zur Drehmomentübertragung (3, 5) durch ihren mittigen Ring (40) eine Nabe (4) umgeben,
**daß** der mittige Ring eines (5) der Elemente zur Drehmomentübertragung (3, 5) an der Nabe (4) befestigt ist, die an einer ersten Welle, etwa an einer getriebenen Welle, drehfest angebracht werden kann,
während der mittige Ring (40) des anderen (3) der Elemente zur Drehmomentübertragung (3, 5) mittig an einem insgesamt quer ausgerichteten Element (2) befestigt ist, das an einer zweiten Welle, etwa an einer treibenden Welle, drehfest angebracht werden kann.

2. Torsionsdämpfer nach Anspruch 1, **dadurch gekennzeichnet, daß** die Elemente zur Drehmomentübertragung (3, 5) identisch miteinander sind.

3. Torsionsdämpfer nach Anspruch 1 oder 2, **dadurch gekennzeichnet, daß** die Finger (30, 50) im Verhältnis zum mittigen Ring (40) des Elements zur Drehmomentübertragung (3, 5) axial versetzt sind.

4. Torsionsdämpfer nach Anspruch 3, **dadurch gekennzeichnet, daß** der innere Umfang der Finger (30, 50) eines der Elemente zur Drehmomentübertragung (3, 5) eine Kontaktauflagefläche (42) bildet, die geeignet ist, mit dem äußeren Umfang des Rings (40) des anderen Elements zur Drehmomentübertragung (3, 5) in Kontakt zu kommen.

5. Torsionsdämpfer nach Anspruch 3 oder 4, **dadurch gekennzeichnet, daß** die Finger (30, 50) an einer Erhebung (43) des Rings des Elements zur Drehmomentübertragung (3, 5) angebracht sind.

6. Torsionsdämpfer nach Anspruch 5, **dadurch gekennzeichnet, daß** die Erhebungen (43) der Elemente zur Drehmomentübertragung (3, 5) umfangsmäßig aneinander zum Anschlag kommen können, um die relative Winkelauslenkung zwischen den Elementen zur Drehmomentübertragung (3, 5) zu begrenzen.

7. Torsionsdämpfer nach einem der Ansprüche 1 bis 6, **dadurch gekennzeichnet, daß** die Nabe (4) einen quer ausgerichteten Kragen (6) für die anhand von Befestigungsorganen (7), etwa von Nieten (7), vorgenommene Befestigung des Rings (40) ihres zugehörigen Elements zur Drehmomentübertragung (5) aufweist.

8. Torsionsdämpfer nach Anspruch 7, **dadurch gekennzeichnet, daß** das insgesamt quer ausgerichtete Element (2) durch Befestigungsorgane, etwa durch Niete (8), am Ring seines zugehörigen Elements zur Drehmomentübertragung (3) befestigt ist.

9. Torsionsdämpfer nach einem der Ansprüche 1 bis 8, **dadurch gekennzeichnet, daß** die elastischen Dämpfungsmittel (9, 10) die freien Enden der Finger (30, 50) abdecken, wobei sie an diesen durch ihre elastische Masse (10) befestigt sind.

10. Torsionsdämpfer nach Anspruch 9, **dadurch gekennzeichnet, daß** die besagten elastischen Mittel (9, 10) eine gewellte und gegebenenfalls unterteilte Leiste (9) aus Verbundwerkstoff umfassen, die wenigstens teilweise in die elastische Masse (10) eingelassen ist.

11. Torsionsdämpfer nach einem der Ansprüche 1 bis 10, **dadurch gekennzeichnet, daß** das insgesamt quer ausgerichtete Element (2) aus einer Scheibe (2) besteht, die an ihrem äußeren Umfang befestigte Reibbeläge trägt, die zwischen der Druckplatte und der Gegenanpreßplatte einer Kupplung eingespannt werden können.

12. Torsionsdämpfer nach einem der Ansprüche 1 bis 11, **dadurch gekennzeichnet, daß** die Finger (30, 50) axial breiter als ihr zugehöriger Ring (40) sind.

## Claims

1. Torsion damper, notably a friction clutch component for a motor vehicle, having two coaxial parts (2, 3-4, 5), each comprising a torque transmission piece (3, 5), and resilient damping means (9, 10) comprising a resilient mass (10), in which the coaxial parts (2, 3-4, 5) are mounted so as to be able to move with respect to each other counter to resilient damping means (9, 10) fixed to the radially oriented fingers (30, 50) which the torque transmission pieces (3, 5) have circumferentially in alternation, **characterised in that** the torque transmission pieces (3, 5) are in the image of each other and each has a central annulus (40) carrying the said fingers in radial projection towards the outside, **in that** the torque transmission pieces (3, 5) surround, through their central annulus (40), a hub (4), **in that** the central annulus of one (5) of the torque transmission pieces (3, 5) is fixed to the hub (4), adapted to be fixed with respect to rotation to a first shaft such as a driven shaft, whilst the central annulus (40) of the other one (3) of the torque transmission pieces (3, 5) is fixed centrally to a piece (2), of radial orientation overall, adapted to be fixed with respect to rotation to a second shaft such as a driven shaft.

2. Damper according to Claim 1, **characterised in that** the torque transmission pieces (3, 5) are identical to each other.

3. Damper according to Claim 1 or 2, **characterised in that** the fingers (30, 50) are offset axially with respect to the central annulus (40) of the torque transmission piece (3, 5).

4. Damper according to Claim 3, **characterised in that** the internal periphery of the fingers (30, 50) of one of the torque transmission pieces (3, 5) constitutes a contact surface (42) able to come into contact with the external periphery of the annulus (40) of the other torque transmission piece (3, 5).

5. Damper according to Claim 3 or 4, **characterised in that** the fingers (30, 50) are carried by a thicker part (43) of the annulus of the torque transmission piece (3, 5).

6. Damper according to Claim 5, **characterised in that** the thicker parts (43) of the torque transmission pieces (3, 5) are allowed to come circumferentially into abutment on each other in order to limit the relative angular movement between the torque transmission pieces (3, 5).

7. Damper according to any one of Claims 1 to 6, **characterised in that** the hub (4) has a transversely oriented collar (6) for central fixing, by means of fixing members (7), such as rivets (7), of the annulus (40) of its associated torque transmission piece (5).

8. Damper according to Claim 7, **characterised in that** the piece (2), of transverse orientation overall, is fixed by fixing members, such as rivets (8), to the annulus of its associated torque transmission piece (3).

9. Damper according to any one of Claims 1 to 8, **characterised in that** the resilient damping means (9, 10) cover the free ends of the fingers (30, 50) whilst being fixed to them by their resilient mass (10).

10. Damper according to Claim 9, **characterised in that** the said resilient means (9, 10) have a corrugated blade (9), possibly divided, made of composite material, at least partly embedded in the resilient mass (10).

11. Damper according to any one of Claims 1 to 10, **characterised in that** the piece of transverse orientation overall (2) consists of a disc (2) fixedly carrying, at its external periphery, friction linings able to be clamped between the pressure and reaction plates of a clutch.

12. Torsion damper according to any one of Claims 1 to 11, **characterised in that** axially the fingers (30, 50) are wider than their associated annulus (40).
